# EUROPEAN PATENT APPLICATION

(11) **EP 4 530 727 A1**
(43) Date of publication of application: **02.04.2025**
(21) Application number: 24156481.4
(22) Date of filing: 08.02.2024
(51) Int. Cl.: G03G 15/00

(54) **DETERMINATION DEVICE AND IMAGE FORMING APPARATUS**

(30) Priority: 26.09.2023 JP 2023162038
(71) Applicant: FUJIFILM Business Innovation Corp., Minato-ku Tokyo (JP)
(72) Inventor: YUKAWA, Kouhei, Yokohama-shi, Kanagawa (JP); SHIRAKAWA, Yoshinori, Ebina-shi, Kanagawa (JP); KANDA, Torahiko, Yokohama-shi, Kanagawa (JP); HAYASHI, Kazuhiro, Ebina-shi, Kanagawa (JP)
(74) Representative: Kurig, Thomas

(57) **Abstract**

A determination device includes a processor that is used for determining first paper having a surface on which an embossing process is performed and second paper having a surface on which the embossing process is not performed, a light source that irradiates a surface of paper with light, a light detector that receives the light transmitted through the paper and that detects a light transmittance, an ultrasonic transmitter that transmits an ultrasonic wave to the surface of the paper, and an ultrasonic receiver that receives the ultrasonic wave transmitted through the paper and that detects an ultrasonic transmittance, in which the processor is configured to: use an index that is stored in advance in a storage device and that indicates a correlation between the light transmittance and the ultrasonic transmittance in the second paper, and determine whether or not the paper is the first paper or the second paper according to whether or not the light transmittance and the ultrasonic transmittance, which are detected from the paper, are apart from the index by a predetermined threshold value or more.

## Description

### BACKGROUND OF THE INVENTION

### (i) Field of the Invention

The present invention relates to a determination device and an image forming apparatus.

### (ii) Description of Related Art

A media sensor device that automatically identifies a type of paper by reading the paper used for printing with a sensor is known. An image forming apparatus is controlled based on the type of the paper identified by the media sensor device. For example, an operation related to paper transport of the image forming apparatus, control of a transfer device, a fixing device, or the like is performed according to the type of the paper. Accordingly, printing appropriate for the type of the paper is implemented, and an intended printed matter can be obtained.

JP2015-215338A discloses a recording medium smoothness detection apparatus that detects smoothness of a surface of a recording medium. JP2015-215338A also discloses that a printing condition of the image forming apparatus is set based on the detected smoothness.

### SUMMARY OF THE INVENTION

It is required to be able to determine the paper having a surface on which an embossing process is performed and paper having a surface on which the embossing process is not performed.

An object of the present invention is to provide a determination device that determines paper having a surface on which the embossing process is performed and paper having a surface on which the embossing process is not performed, or an image forming apparatus including the determination device.

According to a first aspect of the present disclosure, there is provided a determination device including a processor that is used for determining first paper having a surface on which an embossing process is performed and second paper having a surface on which the embossing process is not performed, a light source that irradiates a surface of paper with light, a light detector that receives the light transmitted through the paper and that detects a light transmittance, an ultrasonic transmitter that transmits an ultrasonic wave to the surface of the paper, and an ultrasonic receiver that receives the ultrasonic wave transmitted through the paper and that detects an ultrasonic transmittance, in which the processor is configured to: use an index that is stored in advance in a storage device and that indicates a correlation between the light transmittance and the ultrasonic transmittance in the second paper, and determine whether or not or not the paper is the first paper or the second paper according to whether or not the light transmittance and the ultrasonic transmittance, which are detected from the paper, are apart from the index by a predetermined threshold value or more.

According to a second aspect of the present disclosure, there is provided the determination device according to the first aspect, in which the index may be a relational expression indicating a correlation between the light transmittance and the ultrasonic transmittance in a plurality of types of the second paper.

According to a third aspect of the present disclosure, there is provided the determination device according to the first aspect, in which the index may be a reference value based on a ratio of the light transmittance to the ultrasonic transmittance in each of a plurality of types of the second paper.

According to a fourth aspect of the present disclosure, there is provided an image forming apparatus including the determination device according to any one of the first aspect to the third aspect.

According a fifth aspect of the present disclosure, there is provided a determination device including a processor that is used for determining first paper having a surface on which an embossing process is performed and second paper having a surface on which the embossing process is not performed, a first electromagnetic wave transmitter that transmits a first electromagnetic wave to a surface of paper, a first electromagnetic wave receiver that receives the first electromagnetic wave transmitted through the paper and that detects a first electromagnetic wave transmittance, a second electromagnetic wave transmitter that transmits a second electromagnetic wave having a longer wavelength and a higher transmission power to the paper than the first electromagnetic wave to the surface of the paper, and a second electromagnetic wave receiver that receives the second electromagnetic wave transmitted through the paper and that detects a second electromagnetic wave transmittance, in which the processor is configured to: use an index that is stored in advance in a storage device and that indicates a correlation between the first electromagnetic wave transmittance and the second electromagnetic wave transmittance in the second paper, and determine whether or not the paper is the first paper or the second paper according to whether the first electromagnetic wave transmittance and the second electromagnetic wave transmittance, which are detected from the paper, are apart from the index by a predetermined threshold value or more.

According to a sixth aspect of the present disclosure, there is provided the determination device according to the fifth aspect, in which the index may be a relational expression indicating a correlation between the first electromagnetic wave transmittance and the second electromagnetic wave transmittance in a plurality of types of the second paper.

According to a seventh aspect of the present disclosure, there is provided the determination device according to the fifth aspect, in which the index may be a reference value based on a ratio of the first electromagnetic wave transmittance to the second electromagnetic wave transmittance in each of a plurality of types of the second paper.

According to an eighth aspect of the present disclosure, there is provided an image forming apparatus including the determination device according to any one of the fifth aspect to the seventh aspect.

According to the first aspect or the fifth aspect of the present disclosure, the paper having the surface on which the embossing process is performed and the paper having the surface on which the embossing process is not performed are determined.

According to the second aspect or the sixth aspect of the present disclosure, the first paper and the second paper are determined by using the relational expression indicating the property of the second paper.

According to the third aspect or the seventh aspect of the present disclosure, the first paper and the second paper are determined by using the reference value indicating the property of the second paper.

According to the fourth aspect or the eighth aspect of the present disclosure, it is possible to use the determination results of the first paper and the second paper in the body of the image forming apparatus.

### BRIEF DESCRIPTION OF THE DRAWINGS

Exemplary embodiment(s) of the present invention will be described in detail based on the following figures, wherein:
Fig. 1 is a diagram showing a configuration of an image forming apparatus according to an exemplary embodiment;
Fig. 2 is a functional block diagram showing the image forming apparatus according to the exemplary embodiment;
Fig. 3 is a diagram showing a configuration of a sensor device according to the exemplary embodiment;
Fig. 4 is a diagram showing an example of a relationship between a light transmittance and an ultrasonic transmittance for a plurality of types of embossed paper and plain paper;
Fig. 5 is a flowchart showing a determination process of embossed paper and plain paper;
Fig. 6 is a flowchart showing another determination process of the embossed paper and the plain paper;
Fig. 7 is a functional block diagram showing the image forming apparatus according to another exemplary embodiment;
Fig. 8 is a flowchart showing a determination process of embossed paper and plain paper in the other exemplary embodiment;
Fig. 9 is a flowchart showing a determination process of the embossed paper and the plain paper in the other exemplary embodiment; and
Fig. 10 is a diagram showing an example of a hardware configuration of a computer.

### DETAILED DESCRIPTION OF THE INVENTION

### <Outline>

Hereinafter, exemplary embodiments of the present invention will be described in detail with reference to accompanying drawings. Configurations described below are examples for description and can be changed as appropriate. In addition, in a case where a plurality of exemplary embodiments, modification examples, or the like are included in the following, characteristic portions thereof are assumed from the beginning to be combined as appropriate and used. Identical or similar elements are designated by identical reference numerals in all drawings, and duplicate description is omitted.

Hereinafter, a determination device that determines first paper having a surface on which the embossing process is performed and second paper having a surface on which the embossing process is not performed, or an image forming apparatus including the determination device will be described.

As an example, the first paper having a surface on which the embossing process is performed may be embossed paper or paper equivalent thereto. As an example, the second paper having a surface on which the embossing process is not performed may be plain paper or paper equivalent thereto.

As an example, the light source may be a light emitting diode (LED), a laser diode (LD), a vertical cavity surface emitting laser (VCSEL), or the like.

A light detector may be, for example, a photodiode.

As an example, the determination device may be configured with only a sensor device separated from a body of the image forming apparatus, or may be configured by combining the sensor device with the body of the image forming apparatus. In addition, the determination device may be provided in a paper transport path of the image forming apparatus or the like.

The determination device may execute the determination process of another paper type at least one of before executing the determination process of the paper type described below or after the execution.

As an example, the image forming apparatus may be an apparatus that performs printing on a recording medium by using a printing method, such as an electrophotographic method, an inkjet method, offset printing, or gravure printing, or the like. The image forming apparatus may apply the image forming condition corresponding to the paper determined by the determination device to the apparatus and the part related to the image formation, and execute the printing process on the paper.

The index used for the determination process indicates a tendency of the second paper having a surface on which the embossing process is not performed. The second paper has a correlation between surface roughness and paper density. That is, in a case where the surface is rough, there is a tendency for the paper density to be low, the light transmittance to be low, and the ultrasonic transmittance to be high. On the other hand, in a case where the surface is not rough, there is a tendency for the paper density to be high, the light transmittance to be high, and the ultrasonic transmittance to be low. The index indicates the tendency of the second paper and indicates the correlation between the light transmittance and the ultrasonic transmittance in the second paper. As an example, the index may be a relational expression indicating a correlation between the light transmittance and the ultrasonic transmittance in a plurality of types of the second paper. In addition, as an example, the index may be a reference value based on a ratio of the light transmittance to the ultrasonic transmittance in each of the plurality of types of second paper.

### <Exemplary Embodiment>

Hereinafter, an exemplary embodiment of determining embossed paper as paper having a surface on which the embossing process is performed and plain paper as paper having a surface on which the embossing process is not performed will be described.

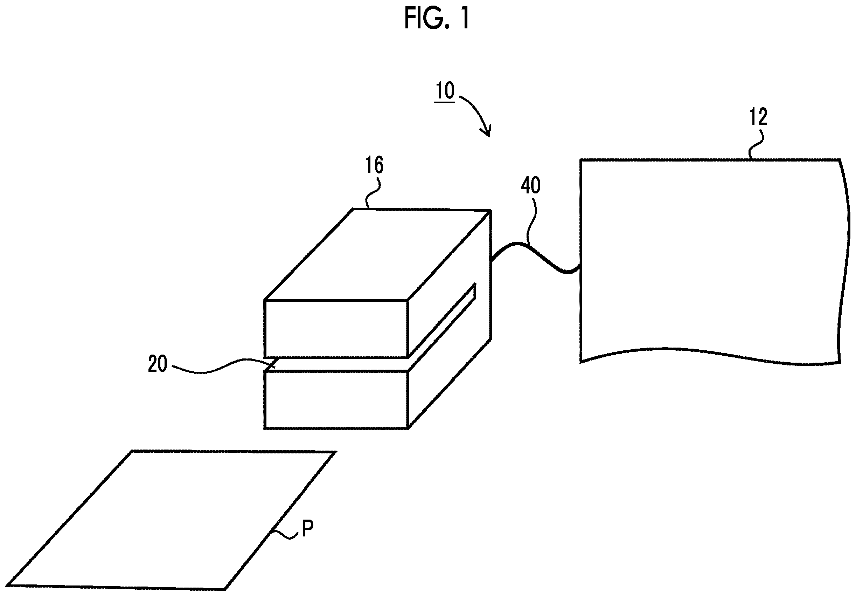

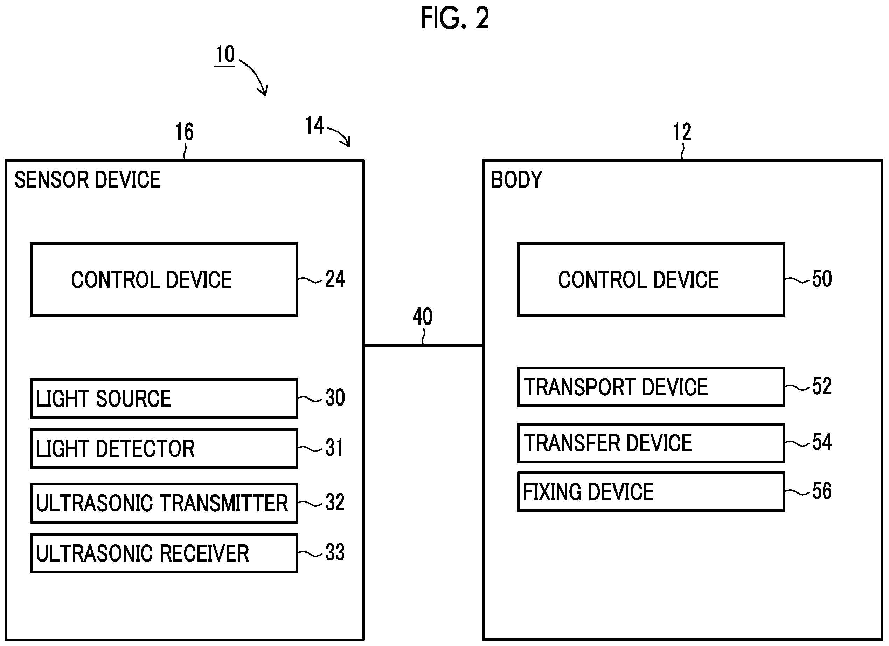

Fig. 1 is a diagram showing a configuration of an image forming apparatus 10 according to the exemplary embodiment. Fig. 2 is a functional block diagram of the image forming apparatus 10. The image forming apparatus 10 includes a body 12 and a sensor device 16.

The body 12 of the image forming apparatus 10 is an apparatus that performs the image formation based on image information obtained from a computer (not shown) such as a PC connected to the body 12. In the present exemplary embodiment, the body 12 of the image forming apparatus 10 is an electrophotographic printing device. The body 12 of the image forming apparatus 10 includes a control device 50, a transport device 52, a transfer device 54, a fixing device 56, and the like.

As shown in Fig. 1, the sensor device 16 includes an insertion port 20 into which paper P is inserted. The sensor device 16 is a device that detects the property of the paper P inserted into the insertion port 20. The sensor device 16 is connected to the body 12 of the image forming apparatus 10 via a cable 40. The cable 40 supplies power from the body 12 to the sensor device 16 and transmits the information on the paper detected by the sensor device 16 to the control device 50 of the body 12.

As shown in Fig. 2, the sensor device 16 includes a control device 24, a light source 30, a light detector 31, an ultrasonic transmitter 32, and an ultrasonic receiver 33. The control device 24 may include, for example, a microcontroller. The light source 30 is an LED. The light detector 31 is a photodiode.

The control device 24 controls the light source 30 and the ultrasonic transmitter 32 according to an instruction from a computer (not shown) such as a PC connected to the control device 50 of the body 12 or the body 12 via the cable 40. The control device 24 irradiates the paper P with light from the light source 30 and acquires a detection value of the light detector 31. In addition, the control device 24 transmits an ultrasonic wave to the paper P from the ultrasonic transmitter 32 to acquire a detection value of the ultrasonic receiver 33.

The control device 24 transmits each acquired detection value to the control device 50 of the body 12. The control device 50 of the body 12 determines the type of the paper P based on each detection value from the control device 24, and an index and a threshold value stored in advance in a storage device in the control device 50. As described above, the sensor device 16 and the control device 50 of the body 12 function as a paper type determination device 14.

An example of an operation of forming an image by the image forming apparatus 10 will be described. First, image information input from a computer such as a PC connected to the body 12 is stored in the storage device in the control device 50. The user sets the paper P in the insertion port 20 of the sensor device 16, determines the type of the paper P, and then sets the paper P in a paper feed cassette of the body 12.

As described above, the control device 50 of the body 12 determines the type of the paper P based on the information transmitted from the sensor device 16. The control device 50 stores image forming conditions for each type of the paper P. The image forming condition is, for example, a condition related to the control of the transport device 52, the transfer device 54, the fixing device 56, and the like. The control device 50 feeds the paper P in the paper feeding cassette and performs the printing process according to the image information. In this case, the control device 50 executes the printing process on the paper P by applying the image forming condition associated with the determined paper P to at least one of the transport device 52, the transfer device 54, or the fixing device 56. For example, in the transfer device 54, the secondary transfer voltage, as an example of the image forming condition, is controlled according to the determined type of paper.

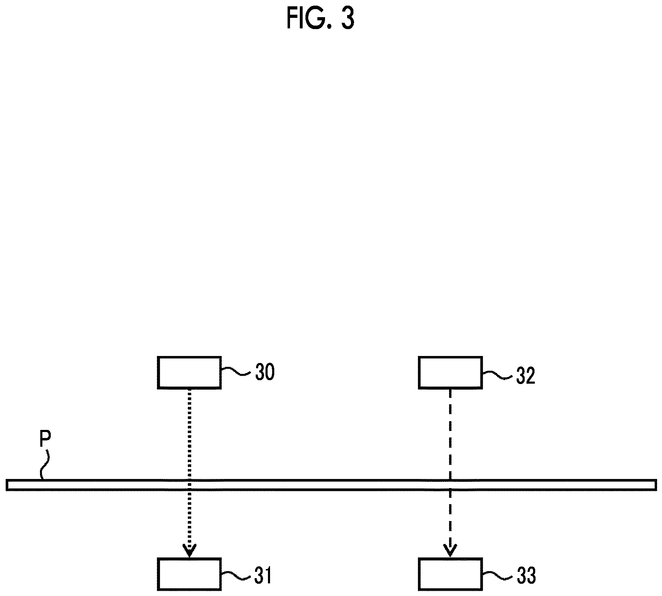

Next, the determination of the embossed paper and the plain paper will be specifically described. The determination device 14 has a function of determining the embossed paper and the plain paper. Fig. 3 is a diagram schematically showing a configuration of the sensor device 16. As described above, the sensor device 16 includes the light source 30, the light detector 31, the ultrasonic transmitter 32, and the ultrasonic receiver 33.

The light source 30 irradiates the surface of the paper P with light. The light detector 31 is located to face the light source 30 with the paper P interposed therebetween. The light detector 31 receives the light of the light source 30 transmitted through the paper P to detect the light transmittance. The ultrasonic transmitter 32 transmits ultrasonic waves to the surface of the paper P. The ultrasonic receiver 33 is located to face the ultrasonic transmitter 32 with the paper P interposed therebetween. The ultrasonic receiver 33 receives the ultrasonic waves of the ultrasonic transmitter 32 transmitted through the paper P to detect the ultrasonic transmittance.

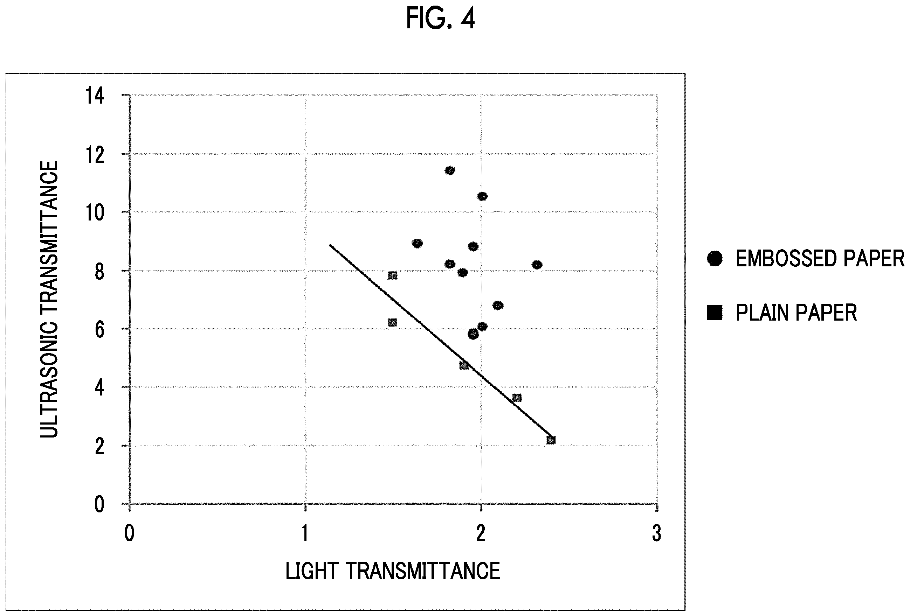

Here, a principle of a method of determining the embossed paper and the plain paper will be described. Fig. 4 is a diagram showing an example of a relationship between the light transmittance and the ultrasonic transmittance for a plurality of types of embossed paper and plain paper. A horizontal axis of the graph in Fig. 4 is the light transmittance, and a vertical axis thereof is the ultrasonic transmittance. In Fig. 4, one plotted round black dot indicates the result for one type of embossed paper, and one plotted square black dot indicates the result for one type of plain paper. The line on the graph indicates a relational expression of the plain paper obtained by the least squares method or the like with respect to the measurement values (square black dots) of the plurality of types of the plain paper.

As understood from Fig. 4, in the case of the plain paper, the ultrasonic transmittance tends to decrease as the light transmittance increases. In addition, in the case of the plain paper, each measurement value (square black dot) is located relatively close to the relational expression (line on the graph). On the other hand, in the case of the embossed paper, there is not much correlation between light transmittance and ultrasonic transmittance, and each measurement value (round black dot) is relatively scattered. This is due to a difference in properties between the plain paper and the embossed paper.

The plain paper has a high correlation between the surface roughness and the paper density. That is, in the case of plain paper, the paper density tends to be low in a case where the surface is rough, and conversely the paper density tends to be high in a case where the surface is not rough. On the other hand, since the embossed paper is paper with a pattern on the surface, the surface roughness and the paper density are not correlated or are not highly correlated. In the case of the embossed paper, the roughness of the surface thereof changes depending on the pattern on the surface of the paper.

Here, in a case where the paper P is irradiated with light from the light source 30, a part of the light is scattered depending on the roughness of the surface of the paper P. Therefore, the light transmittance is the amount of light affected by the surface of the paper. Specifically, the light transmittance is lower as the surface of the paper is rough. On the other hand, in a case where the ultrasonic wave is transmitted to the paper P from the ultrasonic transmitter 32, the ultrasonic wave is unlikely to be affected by the surface of the paper P. Therefore, the ultrasonic transmittance becomes substantially the amount of the ultrasonic waves corresponding to the paper density. Specifically, the ultrasonic transmittance becomes low as the paper density is high.

As described above, in the case of the plain paper, the paper density tends to decrease in a case where the surface is rough, and in a case where the light transmittance decreases, the ultrasonic transmittance increases. On the contrary, in a case where the surface is not rough, the paper density tends to be high, so that the light transmittance increases and the ultrasonic transmittance decreases. Therefore, as shown in Fig. 4, in the case of the plain paper, a relationship in which the ultrasonic transmittance decreases as the light transmittance increases appears.

On the other hand, in the case of the embossed paper, the correlation between the surface roughness and the paper density is not high, so the correlation between the light transmittance and the ultrasonic transmittance is not high. Therefore, in the case of the embossed paper, as shown in Fig. 4, the relationship between the light transmittance and the ultrasonic transmittance hardly appears.

As a result, an index (for example, the relational expression (line on the graph) in Fig. 4) indicating the correlation between the light transmittance and the ultrasonic transmittance in the plain paper is acquired in advance, and in a case where the light transmittance and the ultrasonic transmittance, which are detected from the paper, are close to the index, it is possible to determine that the paper is plain paper. Otherwise, it is possible to determine that the paper is embossed paper. Based on this principle, the paper is determined in the present exemplary embodiment.

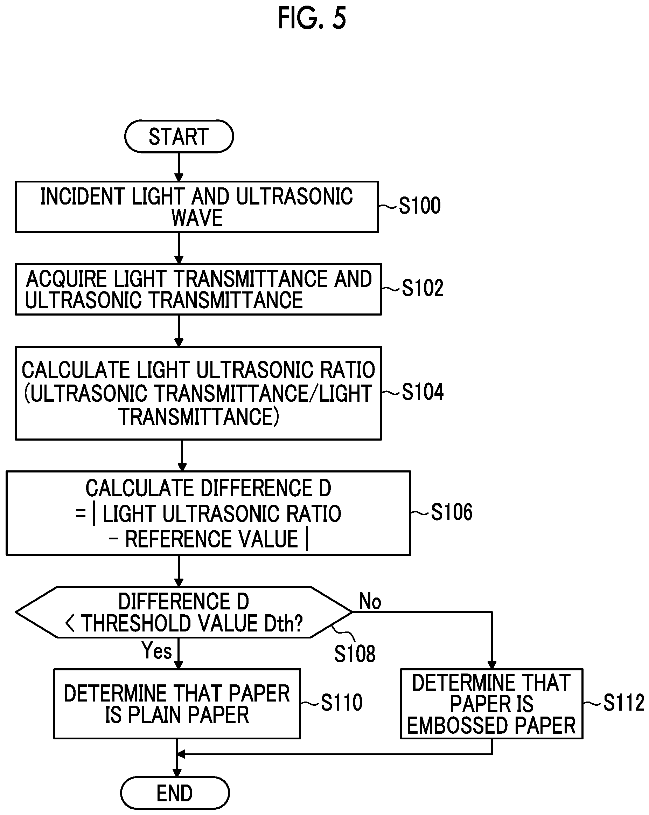

As an example, the index used for the determination may be, for example, a ratio of the light transmittance to the ultrasonic transmittance in each of the plurality of types of plain paper, for example, an average value or a median value of values of (ultrasonic transmittance/light transmittance) in each of the plurality of types of plain paper, and the index is defined as a reference value. The determination process using the reference value will be described with reference to the flowchart of Fig. 5.

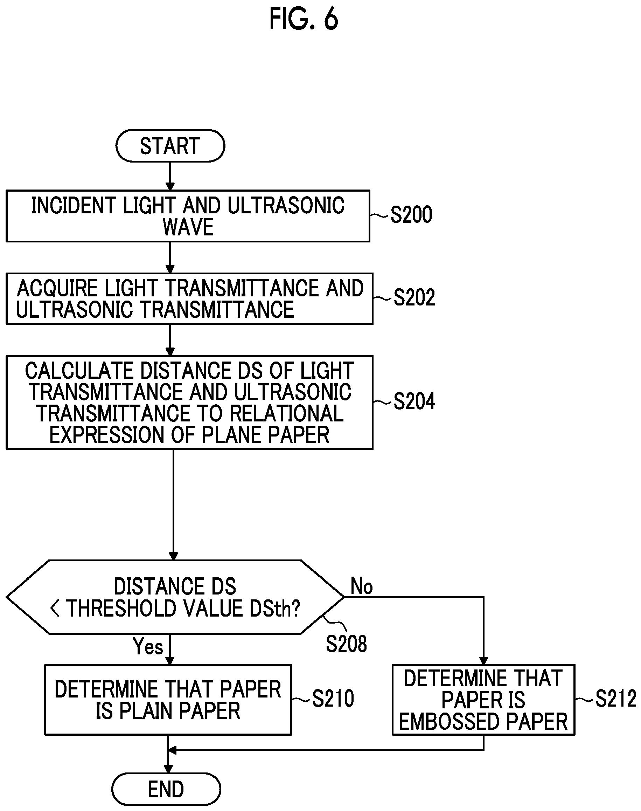

In addition, as an example, the index used for the determination may be the relational expression (line on the graph) in Fig. 4, that is, a relational expression showing a correlation between the light transmittance and the ultrasonic transmittance in the plurality of types of plain paper. The determination process using the relational expression will be described with reference to the flowchart of Fig. 6.

Fig. 5 is a flowchart showing a determination process of the embossed paper and the plain paper. In Step S 100, the control device 24 of the sensor device 16 irradiates the paper P with light from the light source 30. In addition, the control device 24 transmits an ultrasonic wave to the paper P from the ultrasonic transmitter 32. In Step S102, the control device 24 acquires the light transmittance which is a detection value of the light detector 31. In addition, the control device 24 acquires the ultrasonic transmittance which is a detection value of the ultrasonic receiver 33. The control device 24 transmits the light transmittance and the ultrasonic transmittance to the body 12 of the image forming apparatus 10. The control device 50 of the body 12 receives the light transmittance and the ultrasonic transmittance.

In Step S104, the control device 50 of the body 12 calculates a light ultrasonic ratio (= ultrasonic transmittance/light transmittance) by dividing the ultrasonic transmittance by the light transmittance. Next, in Step S106, the control device 50 calculates a difference D between the light ultrasonic ratio and the reference value stored in advance in a storage device of the control device 50. Next, in Step S108, the control device 50 confirms whether or not the difference D is less than a predetermined threshold value Dth stored in the storage device of the control device 50.

In a case of Yes in Step S108, the control device 50 determines that the paper P is plain paper in Step S110. On the other hand, in a case of No in Step S108, the control device 50 determines that the paper P is the embossed paper in Step S112.

According to the determination process described above, the embossed paper and the plain paper are determined.

In Step S104 of Fig. 5, the light ultrasonic ratio is obtained by using the light transmittance as a denominator and the ultrasonic transmittance as a numerator. However, the light ultrasonic ratio may be obtained by using the light transmittance as the denominator and the ultrasonic transmittance as the numerator (light ultrasonic ratio = light transmittance/ultrasonic transmittance). In this case, the reference value used in S106 is an average value, a median value, or the like of the values of (light transmittance/ultrasonic transmittance) in each of the plurality of types of plain paper.

Next, another determination process of the embossed paper and the plain paper will be described. Fig. 6 is a flowchart showing the other determination process of the embossed paper and the plain paper. Steps S200 and S202 in Fig. 6 are the same processes as Steps S100 and S102 in Fig. 5. Steps S204 and subsequent steps in Fig. 6 are different from the flowchart in Fig. 5.

In Step S204, the control device 50 of the body 12 calculates a distance DS between the light transmittance and the ultrasonic transmittance, and the relational expression stored in advance in the storage device of the control device 50. The relational expression is a line on the graph in Fig. 4 or a line corresponding to the line, that is, the relational expression indicates a correlation between the light transmittance and the ultrasonic transmittance in the plurality of types of plain paper. The control device 50 calculates, for example, the shortest distance between the light transmittance and the ultrasonic transmittance, and the value obtained from the relational expression.

Next, in Step S208, the control device 50 confirms whether or not the distance DS is less than a predetermined threshold value DSth stored in the storage device of the control device 50.

In a case of Yes in Step S208, the control device 50 determines that the paper P is plain paper in Step S210. On the other hand, in a case of No in Step S208, the control device 50 determines that the paper P is the embossed paper in Step S212.

In the other determination process described above, the embossed paper and the plain paper are also determined.

### <Another Exemplary Embodiment>

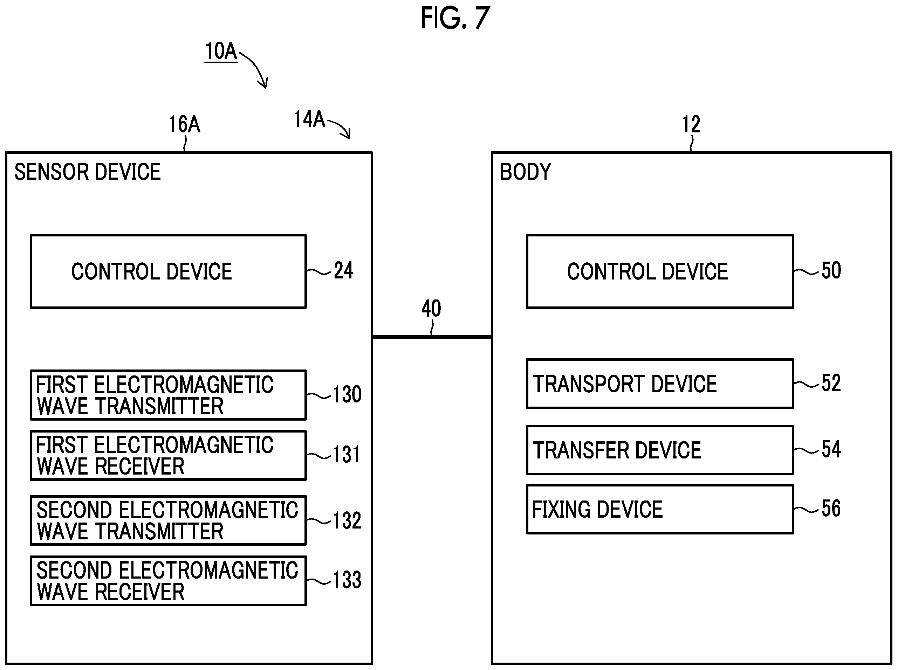

Next, another exemplary embodiment will be described. Fig. 7 is a functional block diagram showing an image forming apparatus 10A according to the other exemplary embodiment. In the image forming apparatus 10A, a sensor device 16A is changed with respect to the image forming apparatus 10 of Fig. 2 described above. Specifically, each of the light source 30, the light detector 31, the ultrasonic transmitter 32, and the ultrasonic receiver 33 of Fig. 2 is replaced with a first electromagnetic wave transmitter 130, a first electromagnetic wave receiver 131, a second electromagnetic wave transmitter 132, and a second electromagnetic wave receiver 133. In the other exemplary embodiment, the sensor device 16A and the control device 50 of the body 12 function as a paper type determination device 14A.

In this exemplary embodiment, a first electromagnetic wave having the same property as light (a property that is likely to be affected by the surface of the paper) is used, and a second electromagnetic wave having the same property as the ultrasonic wave (a property that is unlikely to be affected by the surface of the paper) is used. The first electromagnetic wave may be, for example, visible light, ultraviolet rays, infrared rays, or the like. The second electromagnetic wave is an electromagnetic wave having a longer wavelength and a higher transmission power for paper than the first electromagnetic wave. The second electromagnetic wave may be, for example, a microwave, a radio wave, or the like.

In this exemplary embodiment, each of the light source 30, the light detector 31, the ultrasonic transmitter 32, and the ultrasonic receiver 33 in Fig. 3 is replaced with the first electromagnetic wave transmitter 130, the first electromagnetic wave receiver 131, the second electromagnetic wave transmitter 132, and the second electromagnetic wave receiver 133. The first electromagnetic wave transmitter 130 transmits the first electromagnetic wave to the surface of the paper P. The first electromagnetic wave receiver 131 receives the first electromagnetic wave transmitted through the paper P and detects first electromagnetic wave transmittance. The second electromagnetic wave transmitter 132 transmits the second electromagnetic wave to the surface of the paper P. The second electromagnetic wave receiver 133 receives the second electromagnetic wave transmitted through the paper P and detects second electromagnetic wave transmittance.

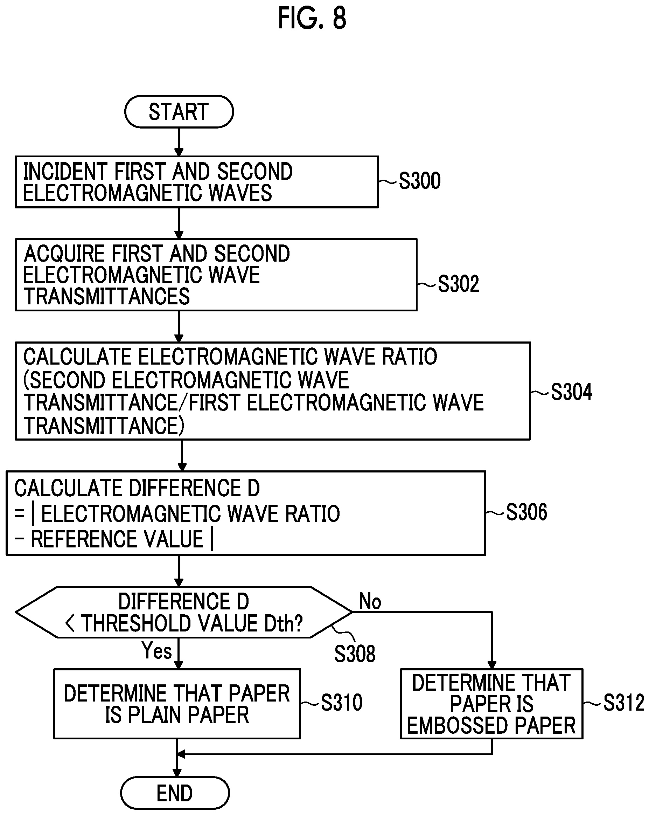

A flowchart of Fig. 8 corresponds to the flowchart of Fig. 5, and the first electromagnetic wave transmittance and the second electromagnetic wave transmittance are used instead of the light transmittance and the ultrasonic transmittance. In S306 of Fig. 8, a reference value is an example of an index indicating a correlation between the first electromagnetic wave transmittance and the second electromagnetic wave transmittance in the plain paper. The reference value may be, for example, a ratio of the first electromagnetic wave transmittance to the second electromagnetic wave transmittance in each of the plurality of types of plain paper, that is, an average value or a median value of the values of (second electromagnetic wave transmittance/first electromagnetic wave transmittance) in each of the plurality of types of plain paper.

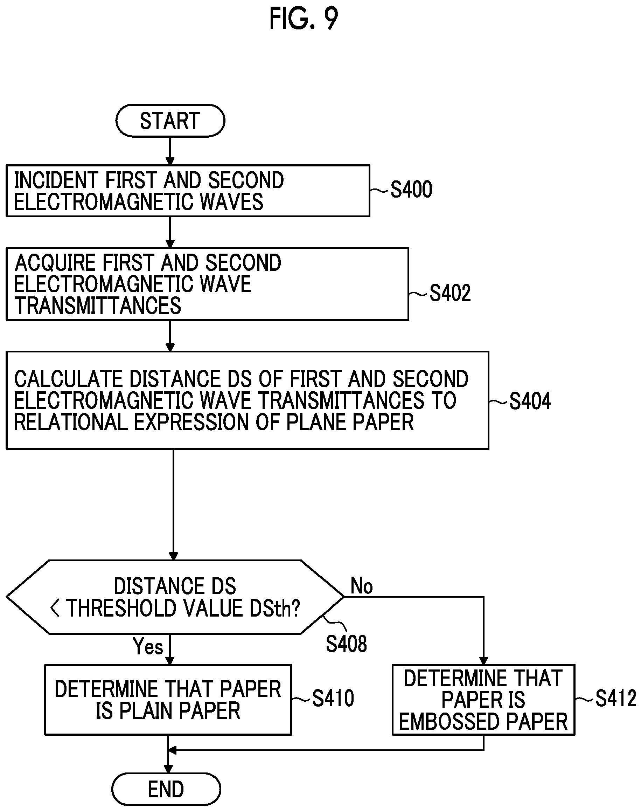

A flowchart of Fig. 9 corresponds to the flowchart of Fig. 6, and the first electromagnetic wave transmittance and the second electromagnetic wave transmittance are used instead of the light transmittance and the ultrasonic transmittance. In S404 of Fig. 9, the relational expression of the plain paper is an example of an index indicating a correlation between the first electromagnetic wave transmittance and the second electromagnetic wave transmittance in the plain paper, and corresponds to the relational expression (line on the graph) of Fig. 4. In the relational expression of the plain paper, the horizontal axis in the graph in Fig. 4 may be replaced with the first electromagnetic wave transmittance, the vertical axis thereof may be replaced with the second electromagnetic wave transmittance, and the measurement values of the plurality of types of plain paper may be plotted, and a line on the graph obtained by the least squares method or the like may be used.

The determination device 14A executes the determination process according to the flowchart of Fig. 8 or Fig. 9.

Next, the flowchart of Fig. 8 will be described. In Step S300, the control device 24 of the sensor device 16A transmits the first electromagnetic wave to the paper P from the first electromagnetic wave transmitter 130. In addition, the control device 24 transmits the second electromagnetic wave to the paper P from the second electromagnetic wave transmitter 132. In Step S302, the control device 24 acquires the first electromagnetic wave transmittance which is a detection value of the first electromagnetic wave receiver 131. In addition, the control device 24 acquires the second electromagnetic wave transmittance which is a detection value of the second electromagnetic wave receiver 133. The control device 24 transmits the first and second electromagnetic wave transmittances to the body 12 of the image forming apparatus 10. The control device 50 of the body 12 receives the first electromagnetic wave transmittance and the second electromagnetic wave transmittance.

In Step S304, the control device 50 of the body 12 calculates an electromagnetic wave ratio (= second electromagnetic wave transmittance/first electromagnetic wave transmittance) by dividing the second electromagnetic wave transmittance by the first electromagnetic wave transmittance. Next, in Step S306, the control device 50 calculates a difference D between the electromagnetic wave ratio and a reference value stored in advance in the storage device of the control device 50. Next, in Step S308, the control device 50 confirms whether or not the difference D is less than a predetermined threshold value Dth stored in the storage device of the control device 50.

In a case of Yes in Step S308, the control device 50 determines that the paper P is plain paper in Step S310. On the other hand, in a case of No in Step S308, the control device 50 determines that the paper P is the embossed paper in Step S312.

In this way, in the determination process of Fig. 8, the embossed paper and the plain paper are also determined.

Next, the flowchart of Fig. 9 will be described. Steps S400 and S402 in Fig. 9 are the same processes as Steps S300 and S302 in Fig. 8. Steps S404 and subsequent steps in Fig. 9 are different from the flowchart in Fig. 8.

In Step S404, the control device 50 of the body 12 calculates the distance DS between the first electromagnetic wave transmittance and the second electromagnetic wave transmittance, and the relational expression stored in advance in the storage device of the control device 50. The control device 50 calculates, for example, the shortest distance between the first electromagnetic wave transmittance and the second electromagnetic wave transmittance, and the value obtained from the relational expression.

Next, in Step S408, the control device 50 confirms whether or not the distance DS is less than a predetermined threshold value DSth stored in the storage device of the control device 50.

In a case of Yes in Step S408, the control device 50 determines that the paper P is plain paper in Step S410. On the other hand, in a case of No in Step S408, the control device 50 determines that the paper P is the embossed paper in Step S412.

In this way, in the determination process of Fig. 9, the embossed paper and the plain paper are also determined.

### <Configuration of Control Device>

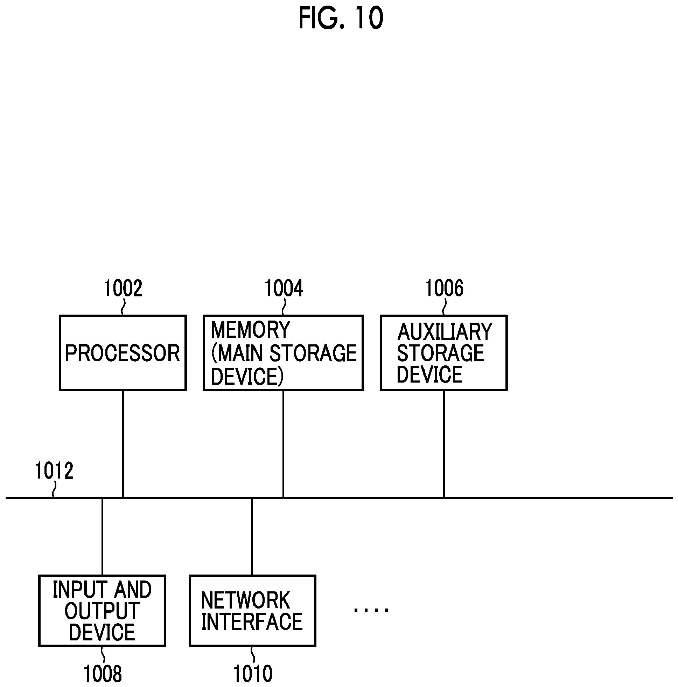

The control device of the above-described exemplary embodiment may be configured by using a computer. The control device may be constructed as, for example, a single computer or a system consisting of a plurality of computers that cooperate with each other. As shown as an example in Fig. 10, for example, a computer, which is the base of the control device, has a circuit configuration in which a processor 1002, a memory (main storage device) 1004 such as a random access memory (RAM), a controller that controls an auxiliary storage device 1006 that is a non-volatile storage device such as a flash memory, a solid state drive (SSD), or a hard disk (HDD), an interface with various input and output devices 1008, a network interface 1010 that performs control for connection with a network, and the like are connected via a data transmission path such as a bus 1012. A program in which the contents of the processes are described is installed in the computer via a network or the like, and stored in the auxiliary storage device 1006. The control device of the present exemplary embodiment is configured by executing the program which is stored in the auxiliary storage device 1006 by the processor 1002 using the memory 1004.

The program described above can be provided via a network such as the Internet and provided being stored in a computer-readable recording medium such as an optical disk or a USB memory.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### (Supplementary Note)

(((1))) A determination device comprising:
   a processor that is used for determining first paper having a surface on which an embossing process is performed and second paper having a surface on which the embossing process is not performed;
   a light source that irradiates a surface of paper with light;
   a light detector that receives the light transmitted through the paper and that detects a light transmittance;
   an ultrasonic transmitter that transmits an ultrasonic wave to the surface of the paper; and
   an ultrasonic receiver that receives the ultrasonic wave transmitted through the paper and that detects an ultrasonic transmittance,
   wherein the processor is configured to:
      use an index that is stored in advance in a storage device and that indicates a correlation between the light transmittance and the ultrasonic transmittance in the second paper; and
      determine whether or not the paper is the first paper or the second paper according to whether or not the light transmittance and the ultrasonic transmittance, which are detected from the paper, are apart from the index by a predetermined threshold value or more.
(((2))) The determination device according to (((1))),
   wherein the index is a relational expression indicating a correlation between the light transmittance and the ultrasonic transmittance in a plurality of types of the second paper.
(((3))) The determination device according to (((1))),
   wherein the index is a reference value based on a ratio of the light transmittance to the ultrasonic transmittance in each of a plurality of types of the second paper.
(((4))) An image forming apparatus comprising:
   the determination device according to any one of (((1))) to (((3))).
(((5))) A determination device comprising:
   a processor that is used for determining first paper having a surface on which an embossing process is performed and second paper having a surface on which the embossing process is not performed;
   a first electromagnetic wave transmitter that transmits a first electromagnetic wave to a surface of paper;
   a first electromagnetic wave receiver that receives the first electromagnetic wave transmitted through the paper and that detects a first electromagnetic wave transmittance;
   a second electromagnetic wave transmitter that transmits a second electromagnetic wave having a longer wavelength and a higher transmission power to the paper than the first electromagnetic wave to the surface of the paper; and
   a second electromagnetic wave receiver that receives the second electromagnetic wave transmitted through the paper and that detects a second electromagnetic wave transmittance,
   wherein the processor is configured to:
      use an index that is stored in advance in a storage device and that indicates a correlation between the first electromagnetic wave transmittance and the second electromagnetic wave transmittance in the second paper; and
      determine whether or not the paper is the first paper or the second paper according to whether the first electromagnetic wave transmittance and the second electromagnetic wave transmittance, which are detected from the paper, are apart from the index by a predetermined threshold value or more.
(((6))) The determination device according to (((5))),
   wherein the index is a relational expression indicating a correlation between the first electromagnetic wave transmittance and the second electromagnetic wave transmittance in a plurality of types of the second paper.
(((7))) The determination device according to (((5))),
   wherein the index is a reference value based on a ratio of the first electromagnetic wave transmittance to the second electromagnetic wave transmittance in each of a plurality of types of the second paper.
(((8))) An image forming apparatus comprising:
   the determination device according to any one of (((5))) to (((7))).

According to (((1))) or (((5))) of the present invention, the paper having the surface on which the embossing process is performed and the paper having the surface on which the embossing process is not performed are determined.

According to (((2))) or (((6))) of the present invention, the first paper and the second paper are determined by using the relational expression indicating the property of the second paper.

According to (((3))) or (((7))) of the present invention, the first paper and the second paper are determined by using the reference value indicating the property of the second paper.

According to (((4))) or (((8))) of the present invention, it is possible to use the determination results of the first paper and the second paper in the body of the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10, 10A: image forming apparatus
12: body
14, 14A: determination device
16, 16A: sensor device
20: insertion port
24: control device
30: light source
31: light detector
32: ultrasonic transmitter
33: ultrasonic receiver
50: control device
52: transport device
54: transfer device
56: fixing device
40: cable
130: first electromagnetic wave transmitter
131: first electromagnetic wave receiver
132: second electromagnetic wave transmitter
133: second electromagnetic wave receiver
1002: processor
1004: memory
1006: auxiliary storage device
1008: input and output device
1010: network interface
1012: bus
P: paper

## Claims

1. A determination device comprising:
a processor that is used for determining first paper having a surface on which an embossing process is performed and second paper having a surface on which the embossing process is not performed;
a light source that irradiates a surface of paper with light;
a light detector that receives the light transmitted through the paper and that detects a light transmittance;
an ultrasonic transmitter that transmits an ultrasonic wave to the surface of the paper; and
an ultrasonic receiver that receives the ultrasonic wave transmitted through the paper and that detects an ultrasonic transmittance,
wherein the processor is configured to:
use an index that is stored in advance in a storage device and that indicates a correlation between the light transmittance and the ultrasonic transmittance in the second paper; and
determine whether or not the paper is the first paper or the second paper according to whether or not the light transmittance and the ultrasonic transmittance, which are detected from the paper, are apart from the index by a predetermined threshold value or more.

2. The determination device according to claim 1,
wherein the index is a relational expression indicating a correlation between the light transmittance and the ultrasonic transmittance in a plurality of types of the second paper.

3. The determination device according to claim 1,
wherein the index is a reference value based on a ratio of the light transmittance to the ultrasonic transmittance in each of a plurality of types of the second paper.

4. An image forming apparatus comprising:
the determination device according to any one of claims 1 to 3.

5. A determination device comprising:
a processor that is used for determining first paper having a surface on which an embossing process is performed and second paper having a surface on which the embossing process is not performed;
a first electromagnetic wave transmitter that transmits a first electromagnetic wave to a surface of paper;
a first electromagnetic wave receiver that receives the first electromagnetic wave transmitted through the paper and that detects a first electromagnetic wave transmittance;
a second electromagnetic wave transmitter that transmits a second electromagnetic wave having a longer wavelength and a higher transmission power to the paper than the first electromagnetic wave to the surface of the paper; and
a second electromagnetic wave receiver that receives the second electromagnetic wave transmitted through the paper and that detects a second electromagnetic wave transmittance,
wherein the processor is configured to:
use an index that is stored in advance in a storage device and that indicates a correlation between the first electromagnetic wave transmittance and the second electromagnetic wave transmittance in the second paper; and
determine whether or not the paper is the first paper or the second paper according to whether the first electromagnetic wave transmittance and the second electromagnetic wave transmittance, which are detected from the paper, are apart from the index by a predetermined threshold value or more.

6. The determination device according to claim 5,
wherein the index is a relational expression indicating a correlation between the first electromagnetic wave transmittance and the second electromagnetic wave transmittance in a plurality of types of the second paper.

7. The determination device according to claim 5,
wherein the index is a reference value based on a ratio of the first electromagnetic wave transmittance to the second electromagnetic wave transmittance in each of a plurality of types of the second paper.

8. An image forming apparatus comprising:
the determination device according to any one of claims 5 to 7.
